# DEMANDE DE BREVET EUROPEEN

(11) **EP 4 764 995 A1**
(43) Date de publication de la demande: **24.06.2026**
(21) Numéro de dépôt: 25222221.1
(22) Date de dépôt: 10.12.2025
(51) Int. Cl.: G06Q 20/22, G06Q 20/38, G07C 9/20, G07C 9/29, H04L 9/32, H04L 9/00, G06Q 20/32, G06Q 30/0645

(54) **DISPOSITIF ET METHODE POUR LA GESTION DE DROITS D ACCES ET D AUTORISATIONS**

(30) Priorité: 19.12.2024 FR 2414740
(71) Demandeur: Commissariat à l'Energie Atomique et aux Energies Alternatives, 75015 Paris (FR)
(72) Inventeur: HENNEBERT, Christine, 38054 GRENOBLE CEDEX 09 (FR); FUENTES RAMIREZ, Miguel-Angel, 38054 GRENOBLE CEDEX 09 (FR)
(74) Mandataire: Cabinet Beaumont

(57) **Abrégé**

La présente description concerne un procédé de gestion d'accès à l'utilisation d'un automate comprenant :
- la fourniture d'une valeur d'identification, associée à un utilisateur, à un premier dispositif ;
- la génération, par un circuit sécurisé du premier dispositif, d'une adresse de compte sur la base d'une clef maître associée au premier dispositif, de la valeur d'identification et d'une valeur de contexte ;
- l'envoi d'une transaction vers l'adresse de compte dans une chaîne de bloc ;
- la validation ou l'invalidation de la transaction, par la chaîne de blocs, sur la base du solde associé à l'adresse de compte dans la chaîne de blocs ; et
- si la transaction est validée par la chaîne de blocs, l'autorisation, par le premier dispositif, d'accès à l'utilisation de l'automate pour l'utilisateur.

## Description

### Domaine technique

La présente description concerne de façon générale la gestion de droits d'accès et des autorisations d'un utilisateur vers un dispositif ou équipement.

### Technique antérieure

Un site industriel comprend généralement plusieurs équipements, tel que par exemple des automates et des portes, dont l'accès doit être contrôlé, ainsi que les autorisations d'y effectuer une ou des opérations et/ou actions. En particulier, ces équipements sont, par exemple, fournis par un fournisseur et utilisés par des utilisateurs tels que des prestataires de service ou des sous-traitants. De manière générale, les utilisateurs des équipements du site industriel proviennent de différentes entités. De plus, l'exploitant du site industriel peut vouloir qu'un utilisateur ait accès à uniquement certains équipements et, par exemple, uniquement pour une plage horaire donnée. L'exploitant peut en outre vouloir qu'un autre utilisateur ait accès à d'autres équipements, ou aux mêmes équipements mais pour une plage horaire différente. L'autorisation d'accès aux équipements du site industriel est généralement gérée avec des éléments et/ou des composants électroniques. Il est important que l'exploitant du site industriel ait la possibilité de gérer les droits d'accès aux équipements, et par exemple d'y ajouter une certaine granularité temporelle.

Les équipements étant utilisés par des utilisateurs provenant de plusieurs entités, il est important de garder une trace, ou un historique, de l'utilisation des équipements. En effet, dans le cas où l'équipement devient dysfonctionnel, provoquant par exemple un incident, il est important de pouvoir remonter à la personne physique, ou morale, ayant causé le dysfonctionnement. A titre d'exemple, un dysfonctionnement peut provenir d'un mauvais paramétrage de l'équipement, une mauvaise manipulation, un mauvais apprentissage, etc.

Il est donc important qu'en cas de dysfonctionnement un audit par une personne habilitée permette de remonter l'historique des utilisateurs ayant manipulés l'équipement défectueux. Cependant, dans un souci de protection des données, il est tout aussi important que cet historique, ainsi que les données liées à chaque utilisateur, ne soient pas accessibles par des tiers non autorisés. En particulier, il est important que l'exploitant du site industriel, les fournisseurs des équipements, les différentes entités employant les utilisateurs, ainsi que n'importe quelle personne ayant un accès, par exemple à un serveur où seraient stockés les historiques, n'ait pas accès aux données liées aux différents utilisateurs. Il y donc un besoin d'une solution pour atteindre ces objectifs, qui présentent un problème technique.

### Résumé de l'invention

Un mode de réalisation prévoit un procédé de gestion, par un premier dispositif, d'accès à l'utilisation d'un automate par un utilisateur, le procédé comprenant :
- la fourniture d'une valeur d'identification, associée à l'utilisateur, au premier dispositif ;
- la génération, par un circuit sécurisé du premier dispositif, d'une adresse de compte sur la base d'une clef maître associée au premier dispositif, de la valeur d'identification et d'une valeur de contexte ;
- l'envoi d'une transaction, comprenant une valeur de coût, vers l'adresse de compte dans une chaîne de bloc ;
- la validation ou l'invalidation de la transaction, par la chaîne de blocs, sur la base du solde associé à l'adresse de compte dans la chaîne de blocs et de la valeur de coût ; et
- si la transaction est validée par la chaîne de blocs, l'autorisation, par le premier dispositif, d'accès à l'utilisation de l'automate pour l'utilisateur.

Selon un mode de réalisation, l'autorisation d'accès à l'utilisation de l'automate comprend l'activation de l'automate par le premier dispositif.

Selon un mode de réalisation, la transaction est validée par la chaîne de blocs lorsque le solde associé à l'adresse de compte est supérieur ou égal à la valeur de coût.

Selon un mode de réalisation, la transaction est une transaction de compte à compte ou une transaction vers un contrat intelligent.

Selon un mode de réalisation, la génération de l'adresse de compte comprend :
- la génération d'une première clef en effectuant la dérivation, par application par le circuit sécurisé, d'une fonction de dérivation de clef associée au standard BitCoin Improvment Proposal 32, de la clef maître selon un premier chemin d'index ;
- la génération d'une première clef publique en multipliant une première partie de la clef feuille avec un point générateur de la courbe elliptique associée au système cryptographique du standard BitCoin Improvment Proposal 32 ; et
- la génération de l'adresse de compte en appliquant une fonction de hachage à la clef publique feuille.

Selon un mode de réalisation, la dérivation de la clef maître selon le premier chemin d'index comprend :
- l'application d'une première valeur d'index, par la fonction de dérivation, la première valeur d'index étant une valeur constante ; et
- suite à l'application de la première valeur d'index, l'application d'une deuxième valeur d'index, d'une troisième valeur d'index et d'une quatrième valeur d'index, les deuxième et troisième valeurs d'index étant dépendantes de la valeur d'identification associée à l'utilisateur et la quatrième valeur d'index correspondant à la valeur contextuelle.

Selon un mode de réalisation, la deuxième valeur d'index correspond aux 31 bits de poids faible de la valeur d'identification et la troisième valeur d'index correspond aux 31 bits de poids fort de la valeur d'identification.

Selon un mode de réalisation, la clef maître est une valeur sur 2N octets, la première clef est une valeur sur 2N octets, et la première partie de la première clef correspond aux N premiers octets de la première clef, N étant un nombre entier.

Selon un mode de réalisation, la valeur de contexte correspond à un encodage de la date d'au moins un jour auquel l'accès à l'utilisation du premier dispositif est autorisé pour l'utilisateur.

Selon un mode de réalisation, la valeur de contexte comprend en outre un encodage d'une plage horaire ou d'une localisation géographique associée au premier dispositif.

Selon un mode de réalisation, le procédé ci-dessus comprend en outre la provision, par l'intermédiaire d'un dispositif externe, d'au moins un crédit sur l'adresse de compte dans la chaîne de bloc en faisant :
- la fourniture, par le premier dispositif d'une deuxième clef publique et d'une chaîne de code associée au premier dispositif ;
- la génération de l'adresse de compte, par le dispositif externe, sur la base de la deuxième clef publique et de la chaîne de code ; et
- la provision d'au moins un crédit sur l'adresse de compte dans la chaîne de blocs.

Selon un mode de réalisation, la deuxième clef publique correspond à une première partie d'une deuxième clef, la deuxième clef étant obtenue par le premier dispositif par dérivation de la clef maître selon la première valeur d'index, et le dispositif externe est configuré pour générer l'adresse de compte sur la base d'une dérivation de clef, sur la base de la deuxième clef publique et de la chaîne de code et sur la base des deuxième, troisième et quatrième valeurs d'index.

Selon un mode de réalisation, la fourniture de la valeur d'identification au premier dispositif s'effectue par l'utilisateur, en présentant un dispositif utilisateur dans lequel est stocké la valeur d'identification, la fourniture s'effectuant par communication en champ proche entre le dispositif utilisateur et le premier dispositif.

Un mode de réalisation prévoit un premier dispositif comprenant un circuit sécurisé dans lequel est stocké une valeur graine, le premier dispositif étant configuré pour, suite à la fourniture d'une valeur d'identification par un utilisateur :
- générer une adresse de compte sur la base d'une clef maître associée au premier dispositif, de la valeur d'identification et d'une valeur de contexte ;
- envoyer une transaction, comprenant une valeur de coût, vers l'adresse de compte dans une chaîne de bloc ; et
- si la transaction est validée par la chaine de blocs, autoriser un accès à l'utilisateur à l'utilisation d'un automate.

Un mode de réalisation prévoit un système comprenant :
- le premier dispositif ci-dessus ;
- une chaîne de blocs configurée pour valider ou invalider la transaction envoyée par le premier dispositif, sur la base du solde associé à l'adresse de compte dans la chaîne de blocs et de la valeur de coût ; et
- un dispositif externe, configuré pour générer l'adresse de compte sur la base d'une deuxième clef publique et de la chaîne de code, fournie par le premier dispositif, de la valeur d'identification et d'une valeur de contexte et pour provisionner au moins un crédit sur le solde du compte à l'adresse de compte dans la chaîne de blocs.

Selon un mode de réalisation, l'adresse de compte est générée par application d'une fonction de dérivation de clef associée au standard BitCoin Improvement Proposal32.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est un schéma illustrant un système d'accès comprenant différents utilisateurs ayant des droits d'accès sur un automate d'un site industriel ;
la figure 2 est une représentation, sous forme de différentes couches, du fonctionnement de la technologie numérique des chaînes de blocs ;
la figure 3 représente un dispositif utilisateur et un dispositif équipement configurés pour la mise en œuvre d'un procédé d'autorisation d'accès, selon un mode de réalisation de la présente description ;
la figure 4 illustre l'authentification d'un utilisateur auprès d'un équipement, selon un mode de réalisation de la présente description ;
la figure 5 illustre une structure hiérarchique de dérivation de clef selon le standard BIP32 ;
la figure 6 illustre la génération d'une valeur d'authentification anonymisée pour un utilisateur, selon un mode de réalisation de la présente description ;
la figure 7 illustre un échange entre un dispositif utilisé par un exploitant du site industriel et le dispositif équipement, selon un mode de réalisation de la présente description ;
la figure 8 illustre la génération, par le dispositif utilisé par l'exploitant, d'une valeur d'authentification anonymisée, selon un mode de réalisation de la présente description ; et
la figure 9 illustre la génération d'une même valeur d'authentification anonymisée, par le dispositif utilisé par l'exploitant et par le dispositif équipement, selon un mode de réalisation de la présente description.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, la technologie numérique chaîne de blocs, les procédés de dérivation de clefs et le standard BIP32 (de l'anglais « BitCoin Improvement Proposal 32 ») sont connus par la personne du métier et ne sont pas décrits en détail.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % ou à 10° près, de préférence à 5 % ou à 5° près.

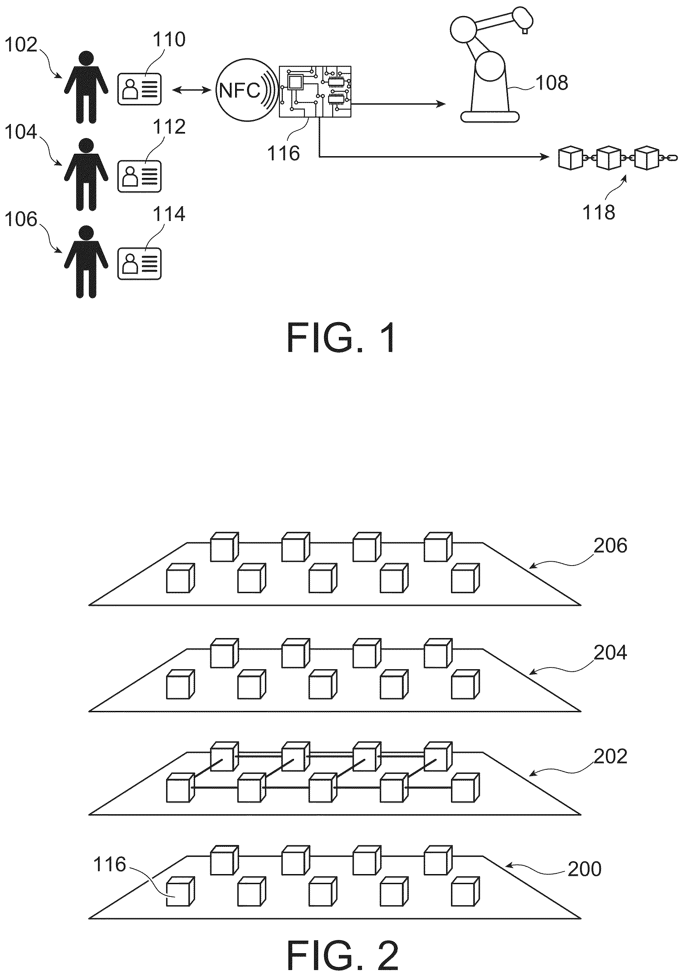

La figure 1 est un schéma illustrant un système d'accès comprenant différents utilisateurs 102, 104 et 106 ayant des droits d'accès sur un automate 108 d'un site industriel. Les utilisateurs 102, 104 et 106 sont par exemple des employés d'une même ou de différentes entreprises ayant une mission sur le site industriel. En particulier, les utilisateurs 102, 104 et 106, détiennent respectivement un dispositif utilisateur 110, 112 et 114. A titre d'exemple, les dispositifs utilisateurs 110, 112 et 114 sont des badges fournis par un exploitant du site industriel. A titre d'exemple, les dispositifs utilisateur 110, 112 et 114 donnent respectivement l'accès aux utilisateurs 102, 104 et 106 pour l'utilisation de l'automate 108. L'utilisation de l'automate comprend par exemple l'activation de l'automate 108 afin de déverrouiller une porte, alimenter en électricité une machine ou un autre type de circuit électronique, désactiver un système d'alarme d'intrusion, etc. A titre d'exemple, l'automate 108 est un actionneur permettant l'ouverture d'une porte ou le fonctionnement d'une machine industrielle. Les dispositifs utilisateurs 110, 112 et 114 comprennent par exemple chacun un circuit de communication en champ proche (NFC - de l'anglais « Near Field Communication »).

L'automate 108 comprend, ou est relié à, un ou plusieurs dispositifs équipement 116. En particulier, le dispositif équipement 116 comprend un circuit de communication en champ proche. Le dispositif équipement 116 est en outre configuré pour activer ou commander l'automate 108, par exemple par l'intermédiaire de signaux de commande. Le site industriel comprend par exemple une pluralité d'automates. Chaque automate comprend alors, ou est relié à, un ou plusieurs dispositifs équipement 116.

Afin d'utiliser l'automate 108, chaque utilisateur 102, 104 ou 106 s'identifie après du dispositif 116 par l'intermédiaire de son dispositif utilisateur 110, 112 ou 114. Le dispositif équipement 116 est alors configuré pour autoriser ou non l'utilisation de l'automate 108, sur la base de cette identification. A titre d'exemple, le dispositif équipement 116, ou l'automate 108, comprend un compteur de temps ou un chronomètre (non illustrée). A titre d'exemple, lorsque le dispositif équipement 116 autorise l'accès, pour un utilisateur, à l'utilisation de l'automate 108, le compteur est déclenché. Lorsque le compteur atteint une durée seuil, de l'ordre d'une ou plusieurs heures, le dispositif équipement 116 est configuré pour refuser l'accès à l'automate 108 afin que l'utilisateur 102 n'y ait plus accès, ou ne puisse plus le manipuler.

Selon un mode de réalisation, le dispositif équipement 116 est configuré pour effectuer une transaction, sur la base de l'identification, vers une chaîne de blocs 118, mise en œuvre, par exemple, par un serveur distant relié au dispositif équipement 116 par l'intermédiaire d'un réseau filaire et/ou non filaire. A titre d'exemple, la chaîne de blocs est une chaine de blocs dite publique, par exemple accessible depuis internet, et telle que les chaînes de type BitCoin ou Ethereum. Dans d'autres exemples, la chaine de blocs est une chaîne de blocs de consortium ou une chaine de blocs privée.

La figure 2 est une représentation, sous forme de différentes couches, du fonctionnement de la technologie numérique chaine de blocs.

Une couche 200 représente le réseau de pairs-à-pairs. Chaque bloc 201 représente un nœud du réseau, par exemple une machine. Les machines échangent de l'information entre elles de façon distribuée. En particulier, dans une chaine de blocs, il n'y a pas de serveur central, l'information est répliquée sur chaque machine. A titre d'exemple, chaque dispositif équipement 116 constitue un nœud pour la chaîne de blocs 118.

Une couche 202 représente un protocole de consensus de la chaine de blocs. L'objectif de cette couche est d'accorder les machines entre elles. Le protocole de consensus permet aux machines de s'accorder entre elles sur l'information qu'elles hébergent dans un registre (en anglais « ledger ») partagé et répliqué. La sécurité du protocole est par exemple mise en œuvre par un « crédit » (en anglais « coin »), tel qu'une cryptomonnaie pour les chaines de blocs dites non permissionnées ou un carburant pour les chaines de blocs dites permissionnées.

Une couche 204, facultative, représente l'exécution de contrats intelligents (en anglais « smart contracts »). Les contrats intelligents sont un code informatique exécuté par de façon distribuée par tous les nœuds participants au consensus. L'exécution des contrats intelligents est telle que le résultat des opérations effectuées par chacun des nœuds fasse consensus selon une majorité des nœuds pour être validé. Les contrats intelligents sont, par exemple, en outre configurés pour coder des jetons (en anglais « token ») fongibles ou non fongibles. A titre d'exemple, les jetons fongibles sont codés par des contrats intelligents tels que le ERC20 (de l'anglais « Ethereum Request for Comment »). A titre d'exemple, les jetons non fongibles sont codés par des contrats intelligents tels que le ERC721 (de l'anglais « Ethereum Request for Comment »). Les contrats intelligents ERC20 et ERC721 sont tous deux mis en œuvre sur le réseau de la chaîne de blocs Ethereum. D'autres exemples existent et sont connus par la personne du métier. Les jetons constituent une monnaie d'échange au sein d'une même communauté sur une chaîne de blocs.

Une couche 206 représente des applications distribuées et développées pour utiliser le système résultant des couches 200, 202, et de manière facultative 204. Les applications permettent d'envoyer des transactions vers la chaine de blocs, soit pour activer une fonction d'un contrat intelligent, soit pour transférer des crédits directement sur la couche 200. Lorsqu'une transaction est effectuée vers un contrat intelligent ou lorsque des crédits sont transférées d'un compte d'un utilisateur de la chaine de blocs à l'autre, il est par exemple assuré que le solde du compte de l'émetteur soit positif et détienne des crédits. Une transaction vers un contrat intelligent requiert de payer le coût d'exécution du contrat intelligent, ce cout est appelé gaz (en anglais « gas ») et en généralement payé en crédits.

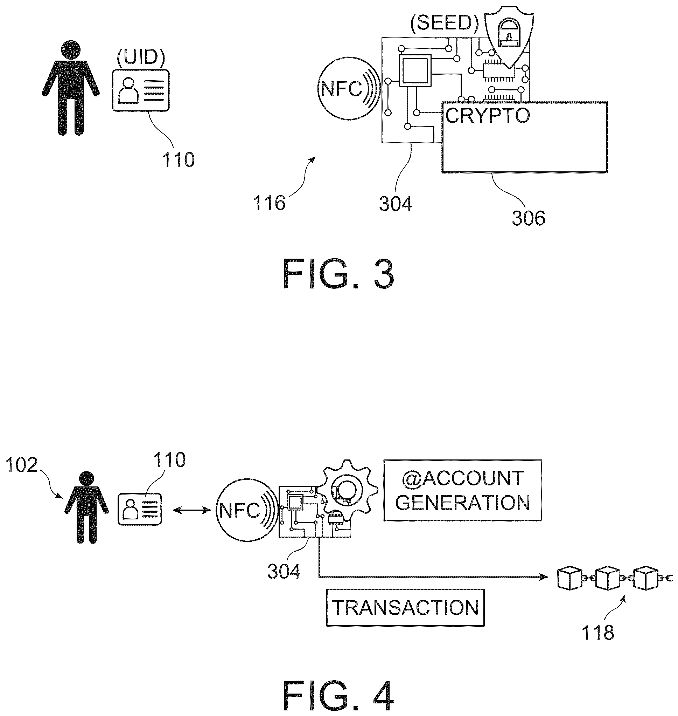

La figure 3 représente le dispositif utilisateur 110 et le dispositif équipement 116 configurés pour la mise en œuvre d'un procédé d'autorisation d'accès à l'utilisation de l'automate 108 de la figure 1, selon un mode de réalisation de la présente description. Le dispositif 110 comprend une valeur d'identification (UID), par exemple stockée dans une mémoire non volatile comprise dans le dispositif utilisateur 110. La valeur d'identification d'un dispositif utilisateur est unique, c'est à dire que deux dispositifs utilisateur différents comprennent chacun une valeur d'identification différente. Le dispositif utilisateur 110 est par exemple fourni à un utilisateur, tel qu'un intervenant sur le site industriel, par l'exploitant du site industriel. La valeur d'identification du dispositif utilisateur 110 est donc connue par l'exploitant du site industriel. A titre d'exemple, la valeur d'identification est stockée dans le dispositif utilisateur 110 de façon non chiffrée. A titre d'exemple, la valeur d'identification est une valeur encodée sur au moins 31 bits. Dans un autre exemple, la valeur d'identification est une valeur encodée sur moins de 31 bits.

Le dispositif équipement 116 comprend un circuit sécurisé 304 comprenant une mémoire non volatile dans laquelle est stockée une valeur graine (en anglais « seed »). La valeur graine est une valeur secrète provisionnée dans le circuit 304 par exemple par le fournisseur du dispositif équipement 116. Cette valeur n'est, en particulier, connue ni par l'exploitant du site industriel, ni par l'utilisateur 102. Le circuit sécurisé 304 comprend par exemple un circuit cryptographique 306 (CRYPTO) configuré pour la dérivation de clef. Selon un mode de réalisation, le circuit cryptographique est configuré pour dériver des clefs selon le standard BIP32.

La figure 4 illustre l'authentification de l'utilisateur 102 auprès du dispositif équipement 116, associé à l'automate 108, selon un mode de réalisation de la présente description.

Selon un mode de réalisation, lorsque l'utilisateur 102 s'identifie, par l'intermédiaire du dispositif utilisateur 110, auprès du dispositif équipement 116, le circuit sécurisé 304 est configuré pour générer une adresse de compte (@ACCOUNT GENERATION) sur la base de la valeur d'identification et de la valeur graine. La génération s'effectue par exemple par le circuit cryptographique 306. Le circuit sécurisé est ensuite configuré pour envoyer une transaction (TRANSACTION) vers la chaine de blocs 118. La transaction est alors enregistrée dans la chaîne de blocs 118 lorsque le solde associé à l'adresse de compte est positif. Lorsque la transition est enregistrée, le dispositif équipement 116 est configuré pour autoriser l'utilisation de l'automate 108 par l'utilisateur 102. Dans le cas où le solde associé à l'adresse de compte est nul, la transaction est refusée par la chaine de blocs 118 et le dispositif équipement 116 refuse l'utilisation de l'automate 108 par l'utilisateur 102.

Selon un mode de réalisation de la présente description, la consultation de la chaîne de blocs 118 par un tiers ne permet à ce dernier ni de remonter à l'utilisateur 110, ni de remonter au dispositif équipement 116, ni de tracer les actions effectuées par l'utilisateur 110 sur l'automate 108. L'utilisateur 110 agit alors de façon anonymisée sur un système numérique associé au site industriel.

Selon un mode de réalisation, afin de donner des droits d'accès à l'utilisateur 110, l'exploitant du site industriel est capable de construire l'adresse de compte, sur la base de la valeur d'identification et d'une clef publique fournie par le dispositif équipement 116. L'exploitant du site industriel est alors en mesure de provisionner le solde du compte à l'adresse de compte dans la chaîne de blocs 118, afin que l'utilisateur 110 puisse agir sur l'automate 108.

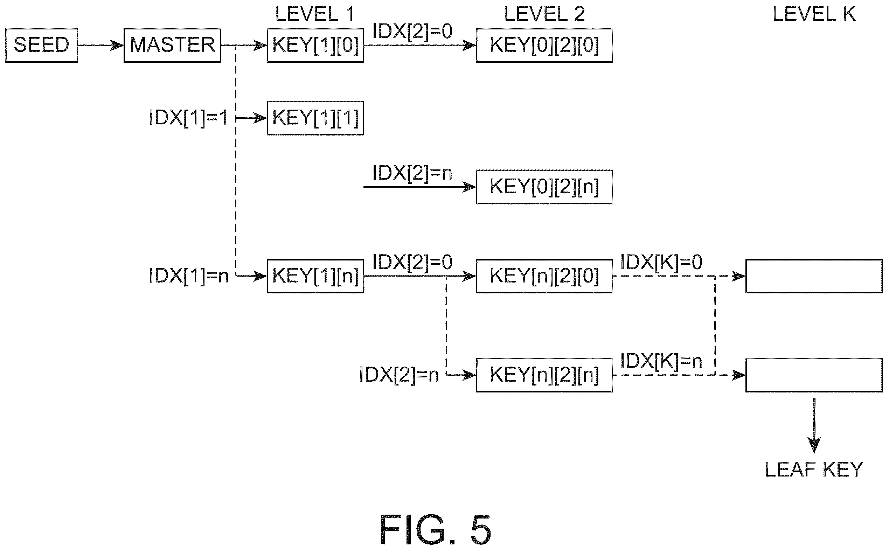

La figure 5 illustre une structure hiérarchique de dérivation de clef selon le standard BIP32. En particulier, la dérivation de clef illustrée par la figure 5 est réalisée par le circuit cryptographique 306 et résulte en l'adresse de compte. En particulier, un authentifiant anonymisé de l'utilisateur 110 consiste en l'adresse de compte émettant vers la chaîne de blocs 118. En particulier, l'adresse de compte est construite en utilisant une structure de portefeuille hiérarchique déterministe, introduite dans le standard BIP32.

La valeur graine (SEED) est utilisée pour la génération d'une clef maître (MASTER). La clef maître est aussi une valeur secrète, stockée dans le circuit 304. En particulier, la clef maître ne peut pas être extraite du circuit sécurisé 304. La valeur graine et la clef maître sont, par exemple, des valeurs codées sur 2N octets, N étant une valeur entière, par exemple égale à 32. Une fonction de dérivation de clef est ensuite appliquée sur la clef maître. La fonction de dérivation de clef est appliquée sur la clef maître sur la base d'un chemin d'index. Le chemin d'index est constitué de plusieurs valeurs d'index. Chaque valeur d'index correspond à une dérivation sur un niveau. A titre d'exemple, les valeurs d'index sont des valeurs sur N bits inférieures ou égales à 2^{*N*-1}.

A titre d'exemple, dans un premier niveau (LEVEL 1) une première valeur d'index (IDX[1]) est appliquée sur la clef maître. Selon la valeur de la première valeur d'index, plusieurs valeurs de clefs dérivées sont obtenues. A titre d'exemple, une clef KEY[1] [0] est obtenue lorsque la première valeur d'index est égale à une première valeur. Un autre clef KEY[1][1] est obtenue lorsque la première valeur d'index est égale à une deuxième valeur (IDX[1]=1). Pour un nombre n+1 de valeurs pouvant être prises par la première valeur d'index (IDX[1]=0, ..., IDX[1]=n), un nombre n+1 de clefs (KEY[1][0],..., KEY[1] [n]) est obtenue. A titre d'exemple, pour une valeur de graine et une clef maître de 64 octets, les valeurs de clefs dérivées sont également sur 64 octets.

A titre d'exemple, dans un deuxième niveau (LEVEL 2) une deuxième valeur d'index (IDX[2]) est appliquée sur les clefs dérivées au premier niveau. Selon la valeur de la deuxième valeur d'index, plusieurs valeurs de clefs dérivées sont obtenues. A titre d'exemple, pour chacune des clefs dérivées KEY[1] [j], 0 ≤ *j* ≤ *n,* un clef KEY[j] [2] [0] est obtenue lorsque la deuxième valeur d'index est égale à une première valeur IDX[2]=0. Pour chacune des clefs dérivées KEY[1][j], 0 ≤ *j* ≤ *n,* un clef KEY[j] [2] [1] est obtenue lorsque la deuxième valeur d'index est égale à une deuxième valeur IDX[2]=1. Pour un nombre n+1 de valeurs pouvant être prises par la deuxième valeur d'index (IDX[2]=0, ..., IDX[2]=n), un nombre (*n*+1)² de clefs est obtenue, à partir des n+1 valeurs de clefs dérivées sur le premier niveau. A titre d'exemple, les valeurs de clefs dérivées sur le deuxième niveau sont également sur 64 octets.

Les clefs sont successivement dérivées, jusqu'à un niveau K (LEVEL K), sur lequel une K-ième valeur d'index (IDX[K]) est appliquée. A titre d'exemple, la K-ième valeur d'index peut prendre n+1 valeurs différentes (IDX[K]=0, ..., IDX[K]=n) et chaque clef dérivée sur le K-1 niveau est donc dérivable en n+1 nouvelles clefs sur le K-ème niveau. En particulier, chaque clef sur le K-ème niveau est dérivable de la clef maître à partir d'un unique chemin de dérivation. Un chemin de dérivation correspond alors à la séquence, ou suite, comprenant les valeurs d'index utilisées pour l'obtention de ladite clef sur le K-ème niveau.

Selon un mode de réalisation, l'adresse de compte est générée par le circuit cryptographique 306 lors de l'identification de l'utilisateur 102 par l'intermédiaire du dispositif utilisateur 110 en appliquant un chemin de dérivation à la clef maître construite à partir de la valeur graine. A titre d'exemple, l'adresse de compte est obtenue par dérivation de la clef maître. La première dérivation est effectuée sur la base d'une valeur d'index constante, inférieure ou égale à 2³¹, par exemple la valeur 0xCAFE, ou toute autre valeur. La clef obtenue est alors une clef de niveau 1 et est égale à la dérivation selon le chemin d'index master/0xCAFE, où le symbole / désigne la dérivation et où master correspond à la valeur de la clef maître. Une dérivation sur un deuxième niveau est réalisée sur la base d'une valeur d'index dépendant de la valeur d'identification du dispositif utilisateur 110. A titre d'exemple, sur le deuxième niveau de dérivation, la valeur d'index utilisée correspond aux 31 bits de poids faible (UID(LSB)) de la valeur d'identification. Le chemin d'index est alors égal à master/0xCAFE/UID(LSB). A titre d'exemple, sur un troisième niveau de dérivation, la valeur d'index utilisée correspond aux 31 bits de poids fort (UID(MSB)) de la valeur d'identification. Le chemin d'index est alors égal à master/0xCAFE/UID(LSB)/UID(MSB). Dans le cas où la longueur de la valeur d'identification est inférieure à 31 bits, les 31 bits de poids fort sont par convention tous égaux à 0. Sur un quatrième niveau de dérivation, la valeur d'index pour la dérivation comprend des indications contextuelles. A titre d'exemple, la valeur d'index utilisée sur le quatrième niveau correspond à la date du jour, par exemple dans un format JJMMAAAA concaténant la date du jour, le mois et l'année, la date correspondant à la date pour laquelle l'exploitant du site industriel souhaite autoriser l'accès à l'automate 108 à l'utilisateur 102. La clef dérivée sur le quatrième niveau est alors, par exemple, dérivée selon le chemin master/0xCAFE/UID(LSB)/UID(MSB)/JJMMAAAA. Dans d'autres exemples, la valeur d'index utilisée sur le quatrième niveau intègre une granularité temporelle plus fine, ou plus large, qu'uniquement le format jour mois année. A titre d'exemple, la valeur d'index utilisée sur le quatrième niveau intègre une plage horaire pour une date donnée. Dans ce cas, l'exploitant du site industriel souhaite que l'utilisateur 102 ait accès à l'automate 108 uniquement sur cette plage horaire. Dans un autre exemple, la valeur d'index utilisée sur le quatrième niveau correspond à la concaténation de plusieurs jours. Dans ce cas, l'exploitant du site industriel souhaite par exemple que l'utilisateur 102 ait accès à l'automate 108 durant plusieurs jours consécutifs.

A titre d'exemple, et de manière facultative, une dérivation supplémentaire, sur un cinquième niveau, est réalisée. A titre d'exemple, cette dérivation supplémentaire est réalisée sur la base d'une valeur d'index comprenant des indications contextuelles supplémentaires, telles que par exemple, les coordonnées de localisation, telle que des coordonnées GPS (de l'anglais « Global Positioning System »), du site industriel ou de l'automate 108. La clef résultante de l'application du chemin d'index sur les quatre ou cinq niveaux, est dénommée ci-après clef feuille (LEAF KEY).

La clef feuille est par exemple une clef sur 2N octets, par exemple 64 octets. Les N premiers octets de la clef feuille correspondent, par exemple, alors à une clef privée, dénommée ci-après clef privée feuille (LEAF _SK). Les N derniers octets correspondent, par exemple à un code de chaîne (en anglais « chaincode »), dénommé ci-après code de chaine feuille.

Une clef publique, dénommée ci-après clef publique feuille (LEAF _PK) et associée à la clef privée feuille correspond à la multiplication dans un système cryptographique sur courbe elliptique entre la clef privée feuille et le point générateur du système cryptographique. En particulier, le système cryptographique est le système sur la courbe elliptique connue par la personne du métier sous le nom de secp256k1.

L'adresse de compte, dénommée ci-après adresse de compte feuille (LEAF ACCOUNT), est ensuite obtenue par hachage de la clef publique feuille. A titre d'exemple, lorsque la chaine de blocs 118 est une chaine de blocs de type Ethereum, l'adresse de compte feuille correspond aux 20 octets de poids faible de la sortie d'une fonction de hachage prenant en entrée la clef publique feuille. A titre d'exemple, la fonction de hachage utilisée est la fonction connue par la personne du métier sous le nom keccak256. Dans un autre exemple, lorsque la chaîne de blocs 118 est de type BitCoin, l'adresse de compte feuille est construite comme étant la sortie de la fonction de hachage connue sous le nom H160 prenant en entrée la clef publique feuille, à laquelle est appliqué un encodage en base 58 suivi de l'ajout d'un code de contrôle de redondance cyclique (de l'anglais « Cyclic Redundancy Check » - CRC).

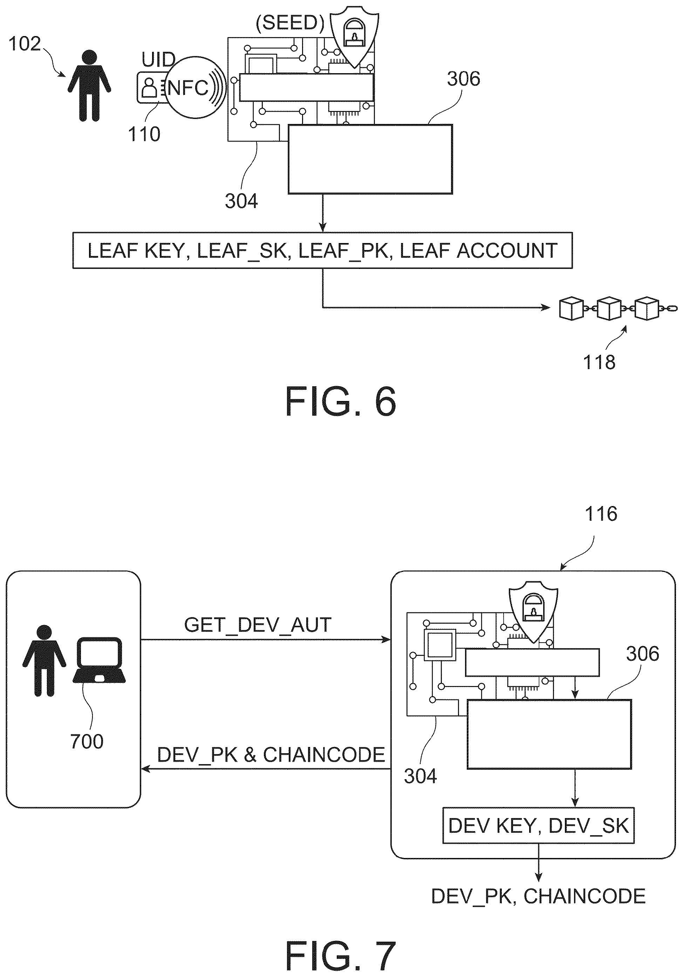

La figure 6 illustre la génération d'une valeur d'authentification anonymisée pour un utilisateur, selon un mode de réalisation de la présente description. En particulier, la valeur d'authentification anonymisée correspond à l'adresse de compte feuille générée par le circuit sécurisé 304, plus particulièrement le circuit cryptographique 306, telle que décrite en relation avec la figure 5. En particulier, le chemin d'index utilisé pour la génération de la clef feuille est, par exemple, master/0xCAFE/UID(LSB)/UID(MSB)/JJMMAAA. Dans d'autres exemples, le premier index est égal à une constante inférieure à 2³¹, différente de 0xCAFE. A titre d'exemple, la première valeur d'index comprend des caractères hexadécimaux. A titre d'exemple, la quatrième valeur d'index comprend une granularité plus fine, ou plus large, qu'une date au format JJMMAAAA, et comprend par exemple une plage horaire. A titre d'exemple, le chemin d'index comprend un cinquième index, comprenant une indication contextuelle supplémentaire, par exemple les coordonnées GPS du site industriel, ou de l'automate 108.

L'adresse de compte feuille est alors utilisée, par le dispositif équipement 116, pour envoyer une transaction sur la chaîne de blocs 118. Selon la technologie de la chaîne de blocs 118, la transaction est par exemple une transaction de valeur de compte à compte, ou une transaction de contrat intelligent. La transaction effectuée requiert par exemple que le solde de l'émetteur, c'est à dire du compte feuille, soit positif. En particulier, la transaction émise vers l'adresse de compte feuille dans la chaîne de blocs 118 comprend une indication d'une valeur de coût. Si le solde du compte feuille comprend assez de crédit pour payer la valeur de coût, et le gaz si besoin, la transaction est validée par la chaîne de blocs 118, sinon, elle est refusée.

Selon un mode de réalisation, l'exploitant du site industriel est en mesure de créditer les adresses des comptes des différents utilisateurs intervenant sur le site. Afin de garantir l'anonymisation des actions, l'exploitant du site industriel est en mesure de construire les adresses de comptes feuilles des différents utilisateurs afin de les créditer.

La figure 7 illustre un échange entre un dispositif utilisé par un exploitant du site industriel et le dispositif équipement 116, selon un mode de réalisation de la présente description. En particulier, l'exploitant du site industriel n'a pas accès à la valeur graine comprise dans le circuit sécurisé 304 et ne peut donc pas générer directement l'authentifiant anonymisé. En effet, la valeur graine ne peut pas être extraite du circuit sécurisé 304. L'exploitant du site industriel n'a, de plus, pas accès aux clefs générées par le circuit cryptographique 306 et par application de la fonction de dérivation. Cependant, les valeurs d'index telles que la valeur d'identification ainsi que les indications contextuelles utilisées pour le chemin d'index sont des valeurs publiques.

Selon un mode de réalisation, l'exploitant du site industriel transmet une requête (GET_DEV_AUT) au dispositif équipement 116 et par l'intermédiaire d'un dispositif 700. A titre d'exemple, le dispositif 700 est un ordinateur, relié par un réseau filaire et/ou non filaire au dispositif équipement 116 et à la chaîne de blocs 118. Suite à cette requête, le dispositif équipement 116, et plus particulièrement le circuit cryptographique 306, est alors configuré pour générer un chemin de dérivation (PATH) correspondant à la dérivation de la clef maître sur la base de la première valeur d'index. La première valeur d'index est en particulier une valeur constante. Dans les exemples de la présente description, cette valeur est arbitrairement fixée à 0xCAFE. En particulier, la fonction de dérivation de clef utilisée est la fonction de dérivation associée au standard BIP32 et est la même que celle utilisée pour la génération des clefs feuilles décrites en relation avec la figure 6. L'application du chemin de dérivation master/0xCAFE sur la valeur graine résulte alors en une clef étendue DEV KEY, sur 2N octets. Les N premiers octets correspondent par exemple à une clef privée DEV_SK et les N derniers octets par exemple à une chaîne de code CHAINCODE. Le circuit cryptographique 306 est alors configuré pour calculer une clef publique DEV_PK associée à la clef privée DEV_SK. En particulier, la clef publique est égale à la multiplication sur courbe elliptique de la clef privée DEV_SK avec le point générateur de la courbe elliptique du système cryptographique secp256k1.

Le dispositif équipement 116 est alors configuré pour retourner, au dispositif 700, la clef publique DEV_PK et la chaîne de code (DEV_PK ; CHAINCODE). En particulier, la valeur de la clef publique DEV_PK dépend de la valeur de graine du dispositif sécurisé 304. La clef DEV KEY, et la clef publique DEV_PK, sont par conséquent uniques. Autrement dit, pour deux dispositifs équipement différents, les clefs DEV KEY et DEV_PK, et la clef privée DEV_SK diffèrent.

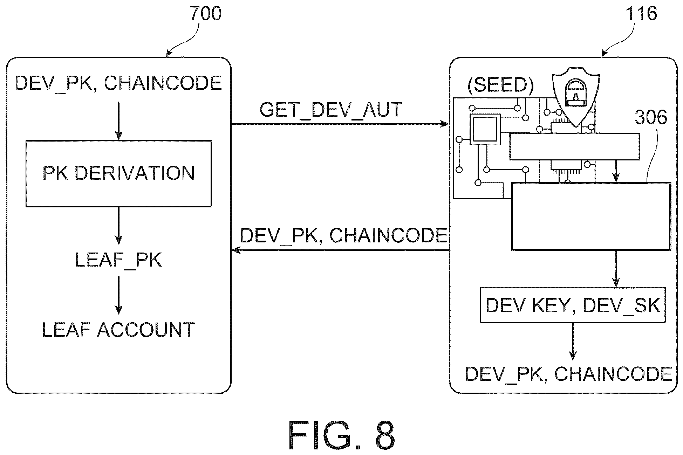

La figure 8 illustre la génération, par le dispositif 700, d'une valeur d'authentification anonymisée, selon un mode de réalisation de la présente description. En particulier, le dispositif 700 comprend une application 800 (PK DERIVATION) de dérivation de clef selon le standard BIP32. En particulier, cette dérivation de clef s'effectue à partir d'une clef publique et d'une chaîne de code. A réception de la clef publique DEV_PK et de la chaîne de code, le dispositif 700, par l'intermédiaire de l'application de dérivation de clef et de l'application d'une fonction de hachage, est configuré pour générer l'adresse de compte feuille, identique à celle générée par le dispositif équipement 116 lorsque l'utilisateur 110 présente son dispositif utilisateur 102.

Les fonctions cryptographiques de dérivation de clefs selon le standard BIP32 sont telles que la dérivation à partir d'une clef publique a pour même résultat que la dérivation à partir de la clef privée associée, multipliée par le point générateur de la courbe elliptique secp256k1.

Lorsque l'exploitant du site industriel veut générer l'adresse de compte feuille pour l'utilisateur 102 et pour une journée, ou plage horaire donnée, il fournit au dispositif 700 la valeur d'identification comprise dans le dispositif utilisateur 110 ainsi que la ou les informations contextuelles comprenant par exemple la date du jour, et/ou la plage horaire, auquel l'accès sera autorisé. Le dispositif 700 reçoit, en outre, du dispositif équipement 116, la clef publique DEV_PK et la chaîne de code CHAINCODE récupérées suite à la requête de l'exploitant du site industriel, telle que décrite en relation avec la figure 7. Le dispositif 700, par l'intermédiaire de l'application 800, applique un chemin de dérivation de clef D/UID(LSB)/UID(MSB)/JJMMAAA, où D correspond à la concaténation de la clef publique DEV_PK et de la chaîne de code. Autrement dit, l'application 800 est configurée pour construire un chemin de dérivation, en partant de D et avec pour premier index la deuxième valeur d'index utilisée par le circuit 306, soit les 31 bits de poids faible de la valeur d'identification, pour deuxième index la troisième valeur d'index utilisée par le circuit 306 soit les 31 bits de poids fort de la valeur d'identification et pour troisième index la quatrième valeur d'index utilisée par le circuit 306 soit les informations contextuelles. A titre d'exemple, d'autre valeurs d'index, correspondant par exemple à des indications contextuelles de localisation, sont appliquées. En particulier, la suite de valeur d'index utilisée par l'application 800 correspond exactement à la suite, en partant de la deuxième valeur d'index, utilisée par le circuit cryptographique 306 lors de la génération de la clef feuille, telle que décrite en relation avec la figure 5. La clef publique feuille (LEAF PK) correspond alors au N premiers octets de la clef feuille. En particulier, la clef publique feuille correspond à la clef publique feuille générée par circuit sécurisé 304, tel que décrit en relation avec la figure 6. L'adresse de compte feuille est ensuite obtenue par hachage de la clef publique feuille, selon le même hachage que celui mis en œuvre par le circuit sécurisé 304 et tel que décrit en relation avec la figure 6. A titre d'exemple, lorsque la chaine de blocs 118 est une chaine de blocs de type Ethereum, l'adresse de compte feuille correspond aux 20 octets de poids faible de la sortie d'une fonction de hachage prenant en entrée la clef publique feuille. A titre d'exemple, la fonction de hachage utilisée est la fonction connue par la personne du métier sous le nom keccak256. Dans un autre exemple, lorsque la chaîne de blocs 118 est de type BitCoin, l'adresse de compte feuille est construite comme étant la sortie de la fonction de hachage connue sous le nom H160 prenant en entrée la clef publique feuille, à laquelle est appliquée un encodage en base 58 suivi de l'ajout d'un code de contrôle de redondance cyclique (de l'anglais « Cyclic Redundancy Check » - CRC). Cette même adresse de compte sera générée par le circuit cryptographique 306 à réception de la valeur d'identification du dispositif 110. En particulier, les deux adresses, celle générée par l'application 800 et celle générée par le circuit cryptographique 306, sont identiques si les informations contextuelles correspondent. A titre d'exemple, si l'exploitant du site industriel indique une première date lors de la génération de l'adresse feuille par l'application 800 et que l'utilisateur 102 présente son dispositif utilisateur 110 au dispositif équipement 116 à une autre date, les valeurs d'index comprenant les informations contextuelles diffèreront et les adresses feuilles générées seront différentes.

L'exploitant du site industriel a donc la capacité de générer, par l'intermédiaire du dispositif 700 et de l'application 800, une adresse de compte feuille pour chaque utilisateur de chacun des automates du site, et ceci suivant une granularité temporelle prédéfinie.

Selon un mode de réalisation, l'exploitant du site industriel crédite le compte feuille de crédits pour en autoriser l'usage. Pour ce faire, l'exploitant du site industriel envoie une transaction, comprenant une valeur, c'est à dire une quantité positive de crédit, vers l'adresse de compte feuille, générée par l'application 800, dans la chaîne de blocs 118. A titre d'exemple, le nombre de crédits transmis dépend d'un usage voulu par l'exploitant du site pour l'utilisateur 102. A titre d'exemple, le nombre de crédits correspond au nombre de connexions autorisées par l'utilisateur 102 sur l'automate 108. Dans un autre exemple, le nombre de crédits correspond à une durée, par exemple un nombre d'heures, sur laquelle l'utilisateur 102 est autorisé à utiliser l'automate 108. Lorsque le solde du compte feuille est nul, l'utilisateur 102 n'a plus accès à l'automate 108. La chaîne de blocs 118 est alors configurée pour qu'aucune transaction ne soit gratuite en crédits. Les crédits sont par exemple utilisés pour payer de la valeur, ou du carburant et/ou du gaz.

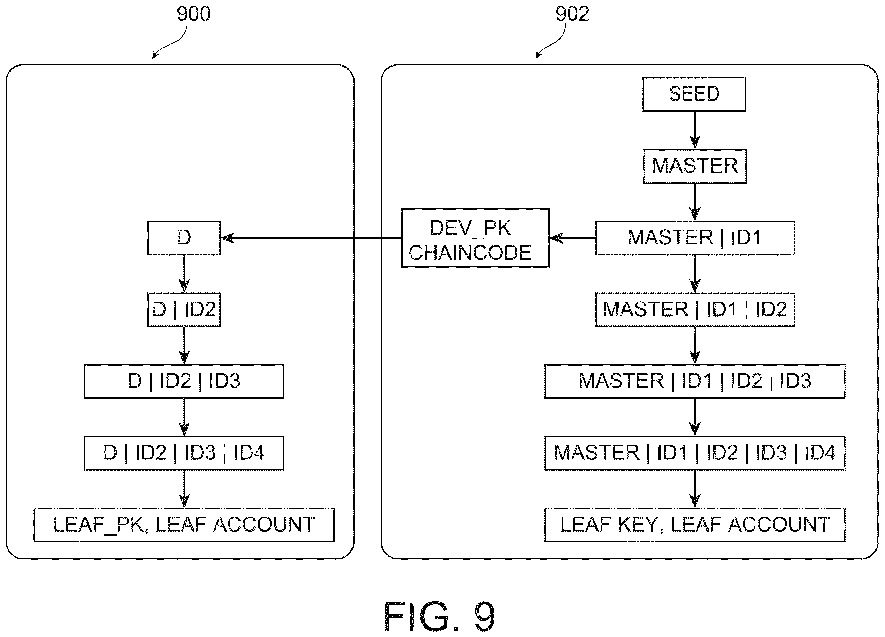

La figure 9 illustre la génération d'une même valeur d'authentification anonymisée, par le dispositif 700 utilisé par l'exploitant et par le dispositif équipement 116, en particulier par le circuit cryptographique 306, selon un mode de réalisation de la présente description.

Un bloc 900 illustre la génération de l'adresse de compte feuille pour l'utilisateur 102, du côté de l'exploitant du site industriel, par l'intermédiaire du dispositif 700, et en particulier de l'application 800. Un bloc 902 illustre la génération de la clef publique DEV_PK, suite à une requête de l'utilisateur, ainsi que la génération de l'adresse de compte feuille, suite à l'identification de l'utilisateur 102.

Comme décrit en relation avec la figure 7, lorsque l'exploitant du site industriel veut provisionner le compte de l'utilisateur, afin de lui garantir l'accès à l'automate 108, il doit générer l'adresse de compte feuille pour l'utilisateur 102 afin de créditer le solde de son compte sur la chaîne de blocs 118.

Le dispositif 700 est alors configuré pour envoyer une requête au dispositif équipement 116. Le circuit sécurisé 304, et plus particulièrement le circuit cryptographique 306, génère alors la clef publique DEV_PK et la chaîne de code, propre au dispositif équipement 116. En particulier, la clef étendue DEV KEY est d'abord générée, par application du chemin d'index MASTER/ID1, où ID1 est la première valeur d'index, décrite ici comme étant égale à 0xCAFE mais pouvant prendre n'importe quelle valeur inférieure à 2³¹. Dans un exemple, cette première valeur d'index est identique pour chacun des dispositif équipement 116. Dans un autre exemple, la première valeur d'index diffère d'un dispositif équipement 116 à l'autre. La clef privée DEV_SK, correspondant par exemple aux N premiers octets de la clef étendue DEV KEY, est ensuite multipliée par le point générateur de la courbe elliptique associé au système cryptographique secp256k1. La clef publique DEV_PK résulte de cette multiplication. La clef publique DEV_PK et la chaîne de code CHAINCODE correspondant par exemple aux N derniers octets de la clef étendue DEV KEY sont fournies, en réponse à la requête, au dispositif 700.

L'exploitant du site fournit en outre la valeur d'identification de l'utilisateur 102 à qui il souhaite donner accès à l'automate 108, ainsi qu'une ou plusieurs informations contextuelles, telles que la date du jour auquel l'accès est souhaité, la plage horaire, etc. De ces informations, le dispositif 700 génère un chemin d'index (PATH2). A titre d'exemple, la première valeur d'index de ce chemin ID2 est égale au N bits de poids faible de la valeur d'identification de l'utilisateur 102. A titre d'exemple, la deuxième valeur d'index de ce chemin ID3 est égale au N bits de poids fort de la valeur d'identification de l'utilisateur 102. A titre d'exemple, la troisième valeur d'index de ce chemin ID3 correspond aux informations contextuelles, par exemple sous un format date du jour JJMMAAA.

Le dispositif 700, par l'intermédiaire de l'exécution de l'application 800, dérive alors successivement la concaténation D de la clef publique DEV_PK et de la chaîne de code fournie par le dispositif équipement 116 par la valeur d'index ID2, puis par la valeur d'index ID3, puis par la valeur d'index ID4. Les chemins de dérivation suivis par l'application 800 sont consécutivement D/ID2, D/ID2/ID3 et D/ID2/ID3/ID4. La clef résultante du chemin de dérivation mis en œuvre par l'application 800 correspond à la clef feuille LEAF KEY, dont les N premiers octets correspondent par exemple à la clef publique LEAF_PK. L'adresse feuille LEAF ACCOUNT est alors générée par application de la fonction de hachage, telle que décrite en relation avec la figure 6.

Lorsque l'adresse du compte feuille LEAF ACCOUNT est générée du côté de l'exploitant du site industriel, celui-ci effectue une transaction afin de provisionner le solde à l'adresse de compte feuille sur la chaine de bloc 118.

Lorsque l'utilisateur 102 veut intervenir ou manipuler l'automate 108, il s'identifie, par l'intermédiaire de son dispositif utilisateur 110, auprès du dispositif équipement 116. Lors de l'identification, la valeur d'identification comprise dans le dispositif utilisateur 110 est transmise, par exemple par communication en champ proche, vers le dispositif équipement 116. L'adresse de compte est alors générée, par le circuit cryptographique 306, par application d'un chemin d'index (PATH1). La dérivation est effectuée à partir de la clef maître MASTER construite à partir de la valeur graine SEED. Le chemin d'index utilisé par le circuit cryptographique 306 correspond à la dérivation selon une première valeur d'index ID1, égale à une constante, par exemple 0xCAFE. Les valeurs d'index ensuite appliquées correspondent à celles appliquées par le dispositif 700, c'est à dire la valeur ID2, correspondant par exemple aux N bits de poids faible de la valeur d'identification, puis la valeur ID3, correspondant par exemple aux N bits de poids fort de la valeur d'identification, puis la valeur ID4, correspondant aux informations contextuelles. L'application 800 et le dispositif équipement 116 sont par conséquent configurés pour générer la valeur d'index ID4 sous le même format. A titre d'exemple, lorsque la valeur d'index ID4 correspond à la date du jour, sous le format JJMMAAAA, le dispositif équipement 116 comprend une horloge et la valeur d'index ID4 est la date du jour sous format JJMMAAAA. La valeur d'index ID4 n'est par conséquent pas une valeur fixe et dépend du contexte, par exemple dépend du jour auquel s'identifie l'utilisateur 102. La dérivation de la clef maître par la suite d'index ID1, ID2, ID3 et ID4 résulte alors en la clef feuille LEAF KEY. L'adresse de compte feuille LEAF ACCOUNT correspond alors à l'application de la fonction de hachage sur la multiplication des N premiers octets de la clef feuille par le point générateur de la courbe elliptique du système cryptographique secp256k1.

L'accès à l'automate 108 est alors autorisé par le dispositif équipement 116 uniquement si le solde du compte feuille, dans la chaîne de blocs est positif et suffisant.

Lorsque l'utilisateur 102 s'identifie auprès du dispositif équipement 116, via son dispositif utilisateur 110, le dispositif équipement 116 génère la clef feuille LEAF KEY puis l'adresse de compte feuille LEAF ACCOUNT. Le dispositif équipement 116 émet alors une transaction, depuis l'adresse de compte feuille, signée numériquement avec la clef feuille. Lorsque le solde du compte feuille est nul, ou ne contient pas suffisamment de crédits pour payer le montant indiqué dans la transaction et/ou le carburant pour l'exécution de l'opération, la transaction est annulée. Le dispositif équipement 116 est alors configuré pour rejeter la demande d'accès de l'utilisateur 102.

A titre d'exemple, dans le cas où la chaîne de blocs 118 est configurée pour mettre en œuvre des contrats intelligents, chaque transaction inclue un coût de gaz payé en crédits pour l'opération ciblée dans le contrat intelligent. Ce coût correspond au gaz. En particulier, le gaz correspond au coût dépensé par la chaîne de blocs 118 pour vérifier la transaction. Le carburant est alors payé en crédits. Si le solde du compte feuille ne contient pas assez de crédits pour payer le gaz, la transaction est annulée et l'accès à l'automate 108 est refusé à l'utilisateur 102.

A titre d'exemple, dans le cas où la chaîne de blocs 118 est configurée pour effectuer des opérations de transfert de valeurs de compte à compte, la transaction est validée si le solde du compte feuille est positif et suffisant. A titre d'exemple, pour chaque transaction validée sur le compte feuille, le solde du compte feuille est discrédité d'un ou plusieurs crédits.

Une personne habilitée est capable de lire les adresses des comptes émetteurs de transactions dans la chaine de blocs sur une période de temps auditée. A titre d'exemple, la personne habilitée prend connaissance d'un planning comprenant l'information des utilisateurs intervenus, les clefs publiques DEV KEY des dispositifs équipement, les valeurs d'identification des utilisateurs et l'information du jour, ou de la plage horaire, auquel l'audit a lieu. La personne habilitée reprend alors le procédé décrit en relation avec la figure 8 pour construire les adresses des comptes à créditer. Une fois les adresses de compte reconstruites, la personne habilitée vérifie par exemple si elles correspondent. En particulier, la personne habilitée vérifie à quelle valeur d'identification correspond une adresse de compte étant mise en cause dans un dysfonctionnement. L'exploitant du site industriel connaissant les valeurs d'identification associées aux utilisateurs, il est alors possible à la personne habilitée de remonter à un utilisateur.

Un avantage des modes de réalisation décrits est que la chaîne de blocs ne comprend pas d'historique des droits d'accès ayant été autorisés ou non. Le système mis en œuvre ne comprend pas de variable dans la chaîne de blocs encodant si l'autorisation est accordée ou non. En effet, les transactions envoyées par les dispositifs équipement ne sont pas effectuées selon un système de requêtes-réponses. La transaction est juste validée si le solde du compte émetteur est positif et refusée sinon.

Un autre avantage des modes de réalisation décrits est que la consultation de la chaîne de blocs de permet ni de remonter à l'identité de l'utilisateur, ni de remonter au dispositif équipement, ni de tracer les actions effectuées par l'utilisateur sur l'automate 108.

Un autre avantage des modes de réalisation est que le droit d'accès est autorisé sur la base d'informations contextuelles, comprenant par exemple une granularité temporelle. Ces informations contextuelles, encodées dans une ou plusieurs valeurs d'index pour la dérivation de clefs, permet de gérer les autorisations d'accès de façon fine. Les autorisations sont par exemple données sur une période donnée et associés à un dispositif équipement. La consultation de la chaîne de blocs ne permet pas d'avoir connaissance de ces informations contextuelles.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, pour ce qui est le type de la chaîne de blocs utilisées, celle-ci peut être une chaîne de blocs publique, privée, ou de consortium, mettant en œuvre des transactions par contrats intelligent et/ou de compte à compte. De même, les valeurs d'index utilisée pour la dérivation de clefs peuvent varier, en particulier pour ce qui est de la première valeur d'index ID1, bien qu'elle soit décrite ici comme étant la valeur 0xCAFE, cette valeur n'est qu'un exemple et n'importe quelle autre valeur peut être utilisée. De même, bien que la description s'appuie sur un exemple d'un site industriel, le procédé de gestion de droits d'accès décrit s'applique à n'importe quel autre exemple.

Enfin, la mise en œuvre pratique des modes de réalisation et variantes décrits est à la portée de la personne du métier à partir des indications fonctionnelles données ci-dessus.

## Revendications

1. Procédé de gestion, par un premier dispositif (116), d'accès à l'utilisation d'un automate (108) par un utilisateur, le procédé comprenant :
- la fourniture d'une valeur d'identification (UID), associée à l'utilisateur (102, 104, 106), au premier dispositif ;
- la génération, par un circuit sécurisé (304) du premier dispositif, d'une adresse de compte (LEAF ACCOUNT) sur la base d'une clef maître associée au premier dispositif, de la valeur d'identification et d'une valeur de contexte ;
- l'envoi d'une transaction, comprenant une valeur de coût, vers l'adresse de compte dans une chaîne de blocs (118) ;
- la validation ou l'invalidation de la transaction, par la chaîne de blocs, sur la base du solde associé à l'adresse de compte dans la chaîne de blocs et de la valeur de coût ; et
- si la transaction est validée par la chaîne de blocs, l'autorisation, par le premier dispositif (116), d'accès à l'utilisation de l'automate (108) pour l'utilisateur.

2. Procédé selon la revendication 1, dans lequel l'autorisation d'accès à l'utilisation de l'automate (108) comprend l'activation de l'automate (108) par le premier dispositif (116).

3. Procédé selon la revendication 1, dans lequel la transaction est validée par la chaîne de blocs (118) lorsque le solde associé à l'adresse de compte (LEAF ACCOUNT) est supérieur ou égal à la valeur de coût.

4. Procédé selon la revendication 1 ou 2, dans lequel la transaction est une transaction de compte à compte ou une transaction vers un contrat intelligent.

5. Procédé selon l'une quelconque des revendication 1 à 3, dans lequel la génération de l'adresse de compte (LEAF ACCOUNT) comprend :
- la génération d'une première clef (LEAF KEY) en effectuant la dérivation, par application par le circuit sécurisé (304), d'une fonction de dérivation de clef associée au standard BitCoin Improvment Proposal 32 (BIP32), de la clef maître selon un premier chemin d'index (PATH1) ;
- la génération d'une première clef publique (LEAF _PK) en multipliant une première partie de la première clef avec un point générateur de la courbe elliptique associée au système cryptographique du standard BitCoin Improvment Proposal 32 (BIP32) ; et
- la génération de l'adresse de compte (LEAF ACCOUNT) en appliquant une fonction de hachage à la clef publique feuille.

6. Procédé selon la revendication 4, dans lequel la dérivation de la clef maître selon le premier chemin d'index comprend :
- l'application d'une première valeur d'index (ID1), par la fonction de dérivation, la première valeur d'index étant une valeur constante ; et
- suite à l'application de la première valeur d'index, l'application d'une deuxième valeur d'index (ID2), d'une troisième valeur d'index (ID3) et d'une quatrième valeur d'index (ID4), les deuxième et troisième valeurs d'index étant dépendantes de la valeur d'identification associée à l'utilisateur (102) et la quatrième valeur d'index correspondant à la valeur contextuelle.

7. Procédé selon la revendication 5, dans lequel la deuxième valeur d'index (ID2) correspond aux 31 bits de poids faible de la valeur d'identification et la troisième valeur d'index (ID3) correspond aux 31 bits de poids fort de la valeur d'identification.

8. Procédé selon l'une quelconque des revendications 4 à 6, dans lequel la clef maître est une valeur sur 2N octets, la première clef (LEAF KEY) est une valeur sur 2N octets, et la première partie de la première clef correspond aux N premiers octets de la première clef, N étant un nombre entier.

9. Procédé selon l'une quelconque des revendications 1 à 7, dans lequel la valeur de contexte correspond à un encodage de la date d'au moins un jour auquel l'accès à l'utilisation du premier dispositif (116) est autorisé pour l'utilisateur (102) .

10. Procédé selon la revendication 8, dans lequel la valeur de contexte comprend en outre un encodage d'une plage horaire ou d'une localisation géographique associée au premier dispositif (116).

11. Procédé selon l'une quelconque des revendications 1 à 9, comprenant en outre la provision, par l'intermédiaire d'un dispositif externe (700), d'au moins un crédit sur l'adresse de compte (LEAF ACCOUNT) dans la chaîne de blocs (118) en faisant :
- la fourniture, par le premier dispositif (116) d'une deuxième clef publique (DEV_PK) et d'une chaîne de code associée au premier dispositif ;
- la génération de l'adresse de compte (LEAF ACCOUNT), par le dispositif externe, sur la base de la deuxième clef publique et de la chaîne de code ; et
- la provision d'au moins un crédit sur l'adresse de compte dans la chaîne de blocs (118).

12. Procédé selon la revendication 11 dans sa dépendance à la revendication 5, dans lequel la deuxième clef publique correspond à une première partie d'une deuxième clef (DEV KEY), la deuxième clef étant obtenue par le premier dispositif (116) par dérivation de la clef maître selon la première valeur d'index (ID1), et dans lequel le dispositif externe (700) est configuré pour générer l'adresse de compte sur la base d'une dérivation de clef, sur la base de la deuxième clef publique et de la chaîne de code et sur la base des deuxième, troisième et quatrième valeurs d'index (ID2, ID3, ID4).

13. Procédé selon l'une quelconque des revendications 1 à 11, dans lequel la fourniture de la valeur d'identification au premier dispositif s'effectue par l'utilisateur, en présentant un dispositif utilisateur (110) dans lequel est stocké la valeur d'identification, la fourniture s'effectuant par communication en champ proche entre le dispositif utilisateur et le premier dispositif.

14. Premier dispositif (116) comprenant un circuit sécurisé (304) dans lequel est stocké une valeur graine (SEED), le premier dispositif étant configuré pour, suite à la fourniture d'une valeur d'identification par un utilisateur (102) :
- générer une adresse de compte (LEAF ACCOUNT) sur la base d'une clef maître associée au premier dispositif, de la valeur d'identification et d'une valeur de contexte ;
- envoyer une transaction, comprenant une valeur de coût, vers l'adresse de compte dans une chaîne de bloc (118) ; et
- si la transaction est validée par la chaine de blocs, autoriser un accès à l'utilisateur (102) à l'utilisation d'un automate (108).

15. Système comprenant :
- le premier dispositif (116) selon la revendication 14 ;
- une chaîne de blocs (118) configurée pour valider ou invalider la transaction envoyée par le premier dispositif, sur la base du solde associé à l'adresse de compte dans la chaîne de blocs et de la valeur de coût ; et
- un dispositif externe (700), configuré pour générer l'adresse de compte (LEAF ACCOUNT) sur la base d'une deuxième clef publique et de la chaîne de code, fournie par le premier dispositif, de la valeur d'identification et d'une valeur de contexte et pour provisionner au moins un crédit sur le solde du compte à l'adresse de compte dans la chaîne de blocs.

16. Système selon la revendication 15, dans lequel l'adresse de compte (LEAF ACCOUNT) est générée par application d'une fonction de dérivation de clef associée au standard BitCoin Improvement Proposal 32.
